# EUROPEAN PATENT SPECIFICATION

(11) **EP 3 518 510 B1**
(45) Date of publication and mention of the grant of the patent: **06.01.2021**
(21) Application number: 18209179.3
(22) Date of filing: 29.11.2018
(51) Int. Cl.: H04M 1/02, H04M 1/18

(54) **FRAME ASSEMBLY, HOUSING AND ELECTRONIC DEVICE HAVING THE SAME**
RAHMENANORDNUNG, GEHÄUSE UND ELEKTRONISCHE VORRICHTUNG DAMIT
ENSEMBLE CADRE, LOGEMENT ET DISPOSITIF ÉLECTRONIQUE LE COMPRENANT

(30) Priority: 25.01.2018 CN 201820128315 U; 25.01.2018 CN 201810075034
(43) Date of publication of application: 31.07.2019
(73) Proprietor: GUANGDONG OPPO MOBILE TELECOMMUNICATIONS CORP., LTD., Wusha, Chang'an Dongguan, Guangdong 523860 (CN)
(72) Inventor: HUANG, Maozhao, Dongguan, Guangdong 523860 (CN); CHEN, Mingren, Dongguan, Guangdong 523860 (CN)
(74) Representative: Manitz Finsterwald Patent- und Rechtsanwaltspartnerschaft mbB

(56) References cited:
- WO-A1-2014/024031
- WO-A1-2017/135667
- US-A1- 2015 281 415
- US-A1- 2016 192 517

## Description

### CROSS-REFERENCE TO RELATED APPLICATION

This application claims priority to a Chinese Publication No. CN110086897A filed on January, 25, 2018, titled "MOBILE TERMINAL, HOUSING AND FRAME ASSEMBLY THEREOF", and a Chinese Publication No CN207802039U filed on January, 25, 2018, titled "MOBILE TERMINAL, HOUSING AND FRAME ASSEMBLY THEREOF".

### TECHNICAL FIELD

The present disclosure relates to the field of consumer devices in general. More particularly, and without limitation, the disclosed embodiments relate to a frame assembly, a housing and an electronic device having the same.

### BACKGROUND

Currently, an electronic device such as a mobile phone may have a rear cover, a frame assembly, and a front cover. The frame assembly may be disposed between and coupled to the rear cover and the front cover. Such that the frame assembly forms a frame of the electronic device. The frame may act as bumper casing for the electronic device, and a structure of the frame needs to be designed in a desire manner to protect the electronic device.

An electronic device and a housing thereof are provided by WO2017135667A1. the electronic device includes: a metal frame including an opening in the central portion thereof; a metal plate included in the opening and having at least a part spaced apart from the metal frame; a coupling member securing the metal plate to the metal frame while filling the space between the metal frame and the metal plate; a printed circuit board brought into contact with or disposed adjacent to one surface of the metal plate; a communication module mounted on the printed circuit board and electrically connected to at least a part of the metal frame; a display brought into contact with or disposed adjacent to the surface of the metal plate or another surface thereof; a first plate covering at least a part of the display device while forming a part of an external housing together with the metal frame; and a second plate covering the opposite side of the display device while forming a part of the external housing together with the metal frame.

A mobile electronic device chassis is provided by WO2014024031A1. The mobile electronic device includes an inner frame with defined antenna keep outs and structural reinforcements. The inner frame surrounds a metal insert that provides structural integrity to the chassis. Antennas can be attached to the outer surface of the inner frame. The inner frame and antennas are covered by an outer frame that surrounds the inner frame and covers the antennas to improve the aesthetics of the chassis.

A casing for an electronic device is provided by US20160192517A1. The casing includes a cover and a frame coupled to the cover. The frame includes a base body and a plurality of non-conductive portions. The base body defines a plurality of gaps spaced from each other. The non-conductive portions are correspondingly inserted into the gaps to insulate opposite sides of each gap. A manufacturing method and an electronic device of the casing are also provided.

### SUMMARY

The invention is as set out in claim 1, preferred forms being set out in the dependent claims 2 to 13.

In the electronic device provided in the present disclosure, by providing the non-glass-made second frame coupled to the glass-made first frame , the second frame can serve as a bumper of the frame assembly , and the first frame is protected by the second frame. In addition, because the second frame and the first frame are made from different material, the non-glass-made second frame can act as a decorative role.

### BRIEF DESCRIPTION OF THE DRAWINGS

The accompanying drawings, which are incorporated in and constitute a part of this specification, illustrate exemplary embodiments of the present disclosure, and together with the description, serve to explain the principles of the disclosure.
FIG. 1 illustrates a schematic perspective view of an electronic device, in accordance with an embodiment of the present disclosure;
FIG. 2 illustrates a schematic perspective view of a frame assembly of the electronic device of FIG. 1;
FIG. 3 illustrates an enlarged schematic view of an area III of the frame assembly of FIG. 2, in accordance with another embodiment of the present disclosure;
FIG. 4 illustrates a schematic cross-sectional view of the frame assembly of FIG. 3;
FIG. 5 illustrates an enlarged schematic view of an area III of the frame assembly of FIG. 2, in accordance with further another embodiment of the present disclosure;
FIG. 6 illustrates a schematic cross-sectional view of the frame assembly of FIG. 5;
FIG. 7 illustrates a schematic cross-sectional view of the frame assembly of FIG. 5, in accordance with till another embodiment of the present disclosure;
FIG. 8 illustrates a schematic cross-sectional view of the frame assembly of FIG. 5, in accordance with till another embodiment of the present disclosure;
FIG. 9 illustrates a schematic cross-sectional view of the frame assembly of FIG. 5, in accordance with till another embodiment of the present disclosure;
FIG. 10 illustrates a schematic view of a hardware environment of an electronic device, in accordance with an embodiment of the present disclosure.

### DETAILED DESCRIPTION OF EMBODIMENTS

As used herein, a "communication terminal", "electronic device" or simply a "terminal") includes, but is not limited to, a device that is configured to receive/transmit communication signals via a wire line connection, such as via a public-switched telephone network (PSTN), digital subscriber line (DSL), digital cable, a direct cable connection, and/or another data connection/network, and/or via a wireless interface with, for example, a cellular network, a wireless local area network (WLAN)1 a digital television network such as a DVB-H network, a satellite network, an AM/FM broadcast transmitter, and/or another communication terminal. A communication terminal or an electronic device that is configured to communicate over a wireless interface may be referred to as a "wireless communication terminal," a "wireless terminal" and/or a "mobile terminal." Examples of mobile terminals and electronic devices include, but are not limited to, a satellite or cellular radiotelephone; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver.

In accordance with an aspect, in one embodiment of the present disclosure, a frame assembly for an electronic device is provided. The frame assembly includes a first frame and a second frame. The first frame defines a receiving space for accommodating electronic elements of the electronic device. The first frame includes an exterior surface departing from the receiving space. The second frame is coupled to the exterior surface of the first frame. The first frame is made of a glass material, and the second frame is made of a material different from the glass material of the first frame.

In accordance with an aspect, in another embodiment of the present disclosure, a housing is provided. The housing includes a rear cover and a frame assembly coupled to the rear cover. The frame assembly includes a first frame and a second frame. The first frame defines a receiving space for accommodating electronic elements of the electronic device. The first frame includes an exterior surface departing from the receiving space. The second frame is coupled to the exterior surface of the first frame. The first frame is made of a glass material, and the second frame and the first frame are made of different materials.

In accordance with an aspect, in further another embodiment of the present disclosure, an electronic device is provided. The electronic device includes a rear cover, a display module, and frame assembly. The rear cover and the display module are coupled to opposite sides of the frame assembly. The frame assembly includes a first frame and a second frame. The first frame defines a receiving space for accommodating electronic elements of the electronic device. The first frame includes an exterior surface departing from the receiving space. The second frame is coupled to the exterior surface of the first frame 32. The first frame is a glass-made frame, and the second frame is a non-glass-made frame.

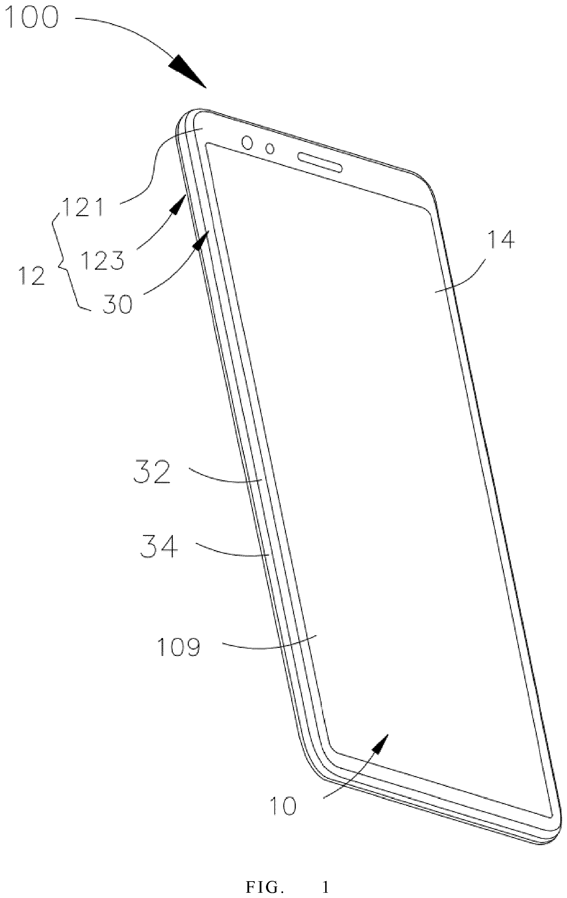

As illustrated in FIG. 1, an electronic device 100 is provided, in accordance with an embodiment of the present disclosure. The electronic device 100 can be any device with communication function and storage function, such as: a tablet, a mobile phone, an e-reader, a remote control, a personal computer (PC), a notebook computer, car device, a network television, a wearable device smart, or other smart device with network capabilities. The electronic device 100 of the illustrated embodiment will be described by taking a mobile phone as an example.

The electronic device 100 includes a housing 12 and an electronic component 10. The electronic component 10 includes a display module 14 and a plurality of electronic elements (not illustrated). The display module 14 is coupled to the housing 12. The electronic elements are received in the housing 12.

The housing 12 is configured to support the display module 14 and receive electronic elements of the electronic device 100. In the embodiment illustrated in FIG. 1, the housing 12 includes a front cover 121, a rear cover 123, and a frame assembly 30. The frame assembly 30 is disposed between and coupled to the front cover 121 and the rear cover 123. The display module 14 coupled to one side of the frame assembly 30, and the rear cover 123 is coupled to an opposite side of the frame assembly 30.

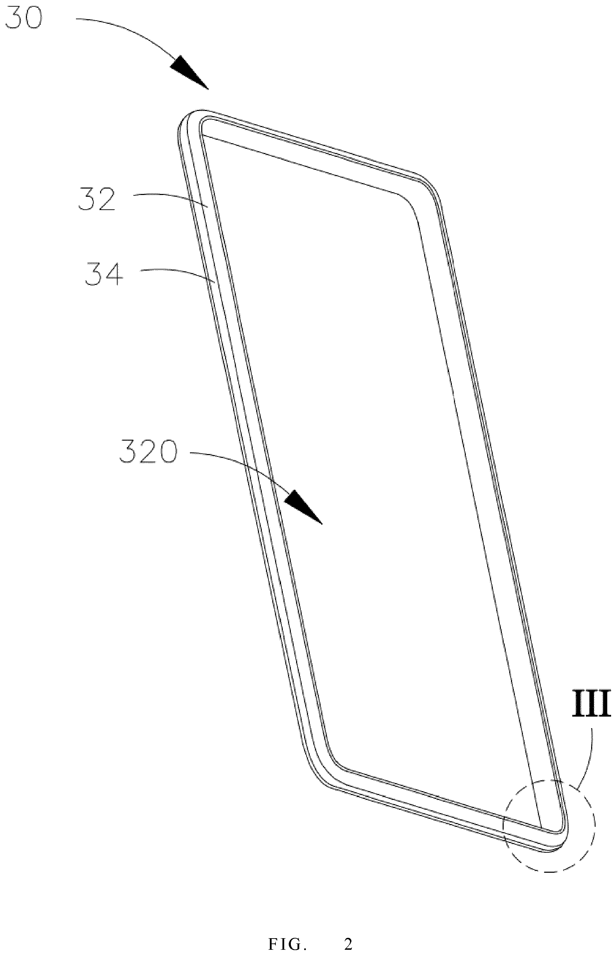

As illustrated in FIG. 1 and FIG. 2, in one embodiment, the frame assembly 30 may be a middle bezel assembly of the electronic device 100. The frame assembly 30 is substantially a rectangular frame and forms a frame of the electronic device 100. In some embodiment, the frame of the electronic device 100 may combine with the front surface by molding. In another embodiment, the frame may combine with the rear cover by molding. In still another embodiment, the frame may be an independent member and assembled to the rear cover 123 and the front cover 123. In the embodiment illustrated in FIG. 1, the frame assembly 30 is assembled with the rear cover 123 and the front cover 121.

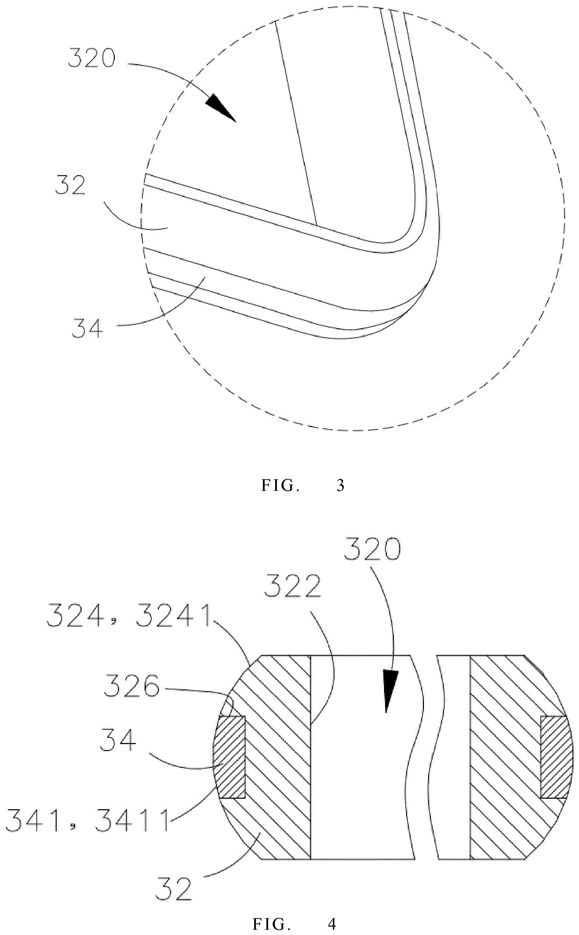

As illustrated in FIG. 3, the frame assembly 30 includes a first frame 32 and a second frame 34. The first frame 32 defines a receiving space 320 for accommodating the electronic elements of the electronic device 100. The second frame 34 is coupled to the first frame 32. Furthermore, the second frame 34 is coupled to an exterior surface of the first frame 32 departing away from the receiving space 320. And the second frame 34 is extending around the first frame 32. The first frame 32 is made of a glass material, and the second frame 34 is made of a material different from the glass material of the first frame 32. In other words, the second frame 34 is a non-glass frame, and the first frame 32 and the second frame are made of different material. By this way, the non-glass-made second frame 34 is disposed on an exterior surface of the glass-made first frame 32 to protect the first frame 32. And the second frame 34 can serve as a decoration and a bumper for the frame assembly 30 and the electronic device 100. In some alternative embodiment, the second frame 34 may be a non-metal frame.

In some embodiments, the material of the second frame 34 is selected from a group of metal, plastic, resin, or rubber, and any combination thereof. In some alternative embodiments, the material of second frame 34 may be made of an elastic material, such as plastic, resin, and rubber, and any combination thereof. In one embodiment, a toughness of the second frame 34 is greater than a toughness of the first frame 32.

As illustrated in FIG. 4, in one embodiment, the first frame 32 includes an interior surface 322 and an exterior surface 324. The interior surface 322 and the exterior surface 324 are disposed at two opposite sides of the first frame 32, and the interior surface 322 faces the receiving space 320. The first frame 32 defines a mounting groove 326 in the exterior surface 324. The mounting groove 326 is configured to receive the second frame 34. The mounting groove 326 extends along a periphery direction of the first frame 32, and the second frame 34 is engaged into the mounting groove 326 and surrounds the first frame 32.

Furthermore, the mounting groove 326 is located substantially at an intermediate position on the exterior surface 324 along a height direction of the first frame 32. So that the second frame 34 can be disposed at a peak of the exterior surface 324 when the second frame 34 is received in the mounting groove 326. In one embodiment, an out surface of the frame assembly 30 is a curved surface, and the second frame 34 is located at a peak of the curved surface. That is, an out surface of the second frame 34 and the exterior surface 326 of the first frame 324 cooperatively form the out surface of the frame assembly 30. So that when the frame assembly 30 is dropped, an impact portion may firstly apply to the second frame 34. Therefore, a cushioning performance of the second frame 34 is effectively configured to protect the frame assembly 30 from damaged. It should be noted that the height direction of the first frame 32 described above should be considered as a direction that coincides with a thickness of the electronic device 100.

Furthermore, the second frame 34 includes an exposed surface 341 departing from the receiving space 320. The exposed surface 341 is smoothly connected with the exterior surface 324 of the first frame 32. In some embodiments, the exterior surface 324 is a curved surface, and the exposed surface 341 is also a curved surface that continuous with the exterior surface 324. In the embodiment illustrated in FIG. 4, in a cross-sectional view of the frame assembly 30 taken along the height direction thereof, a cross-sectional outer contour of the exterior surface 324 is presented as a first arc 3241, and a cross-sectional outer contour of the exposed surface 341 is presented as a second arc 3411 that continuous with the first arc 3241. The second arc 3411 is substantially smoothly coupled with the first arc 3241. So that the frame assembly 30 can have a smooth outer surface. In some alternative embodiments, the exposed surface 341 and the exterior surface 324 may be other structures except curved surfaces. For example, the exposed surface 341 and the exterior surface 324 may be planar surfaces or other curved surfaces (such as a concave curved surfaces, wave surfaces, etc.)

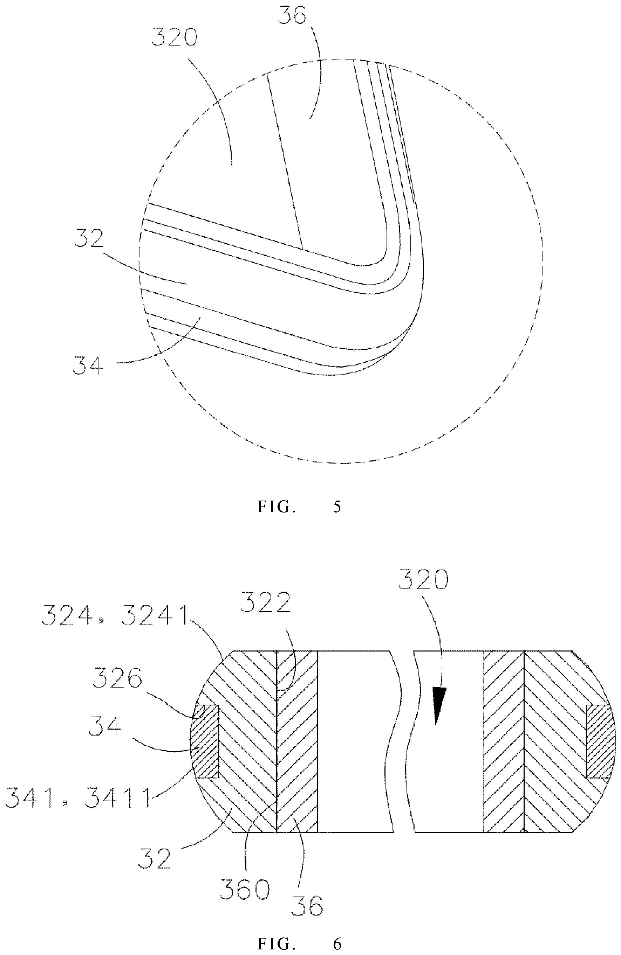

As illustrated in FIG. 5 and FIG. 6, in one embodiment, the frame assembly 30 further includes a third frame 36 coupled to the interior surface 322 of the first frame 32. The third frame 36 is made of a metal to support the first frame 32. So that the frame assembly 30 can have a relatively high strength and toughness. In some alternative embodiments, the material of the third frame 36 may be selected from the group of the iron, steel, stainless steel, copper, phosphor bronze, beryllium copper, nickel copper alloy, and magnesium aluminum alloy, etc., and any combination thereof.

Furthermore, in some embodiments, the first frame 32 may be a transparent glass frame. The third frame 36 further includes a decorative pattern 360 formed on a surface thereof facing the first frame 32. So that a user can observe the decorative pattern 360 through the first frame 32. The decorative pattern 360 of the third frame 36 can be directly formed on the third frame 36, and may be an etching pattern, a silk screen pattern, or a laser engraving pattern, or any combination of the above.

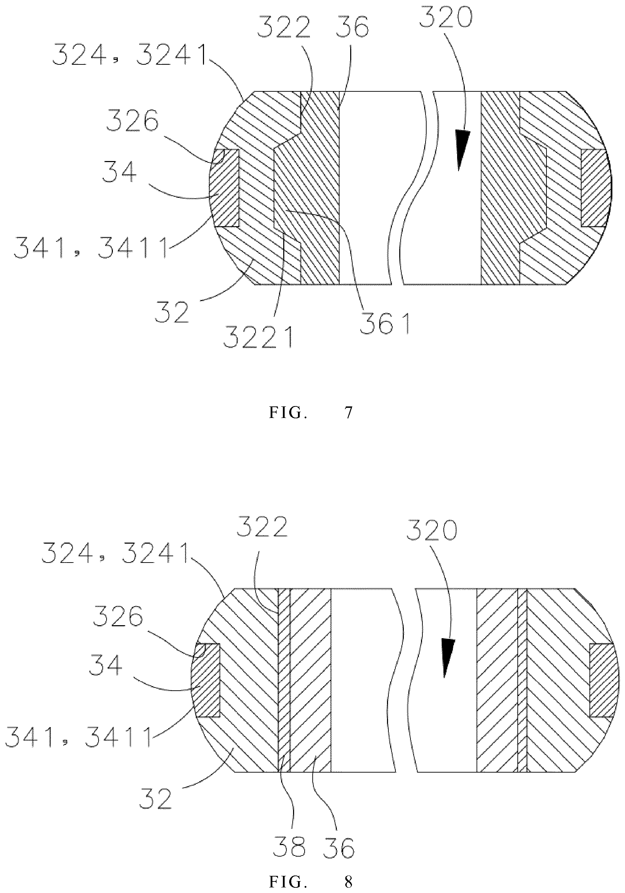

As illustrated in FIG. 7, in one embodiment, the first frame 32 further defines a first mounting portion 3221 in the interior surface 322 thereof, and the third frame 36 further includes a second mounting portion 361 engaged with the first mounting portion 3221. The second mounting portion 361 is embedded with the first mounting portion 3221. In the embodiment illustrated in FIG. 7, the first mounting portion 3221 is a depression defined in the interior surface, and the second mounting portion 361 is a protrusion. The protrusion is cooperated with and received in the depression. Furthermore, the first mounting portion 3221 may be a groove extending in a circumferential direction of the first frame 32. In other embodiments, the first mounting portion 3221 may be a plurality of grooves discretely distributed on the interior surface 322 of the first frame 32. In still other embodiments, the first mounting portion 3221 can be one or more protrusions, and the second mounting portion 361 can be one or more depressions.

In some embodiment, the third frame 36 may be a closed loop or a non-closed loop structure. When the third frame 36 is a closed loop, it may be an integrally formed closed annular frame, or may be a closed frame assembled together by a plurality of side frames. For example, the third frame 36 may include a plurality of side frames, and the plurality of side frames are sequentially end to end to form a closed loop frame. The connection between the plurality of side frames may be an integrally molding connection or an assembled connection. When the third frame 36 is a non-closed frame, it may define at least one opening. For example, the third frame 36 may include a plurality of side frames coupled to the interior surface 322, and at least two of the plurality of side frames are spaced apart from each other to form the opening such that the third frame 36 is a non-closed frame. The opening may be an un-shielded slot that is filled with un-shielded material.

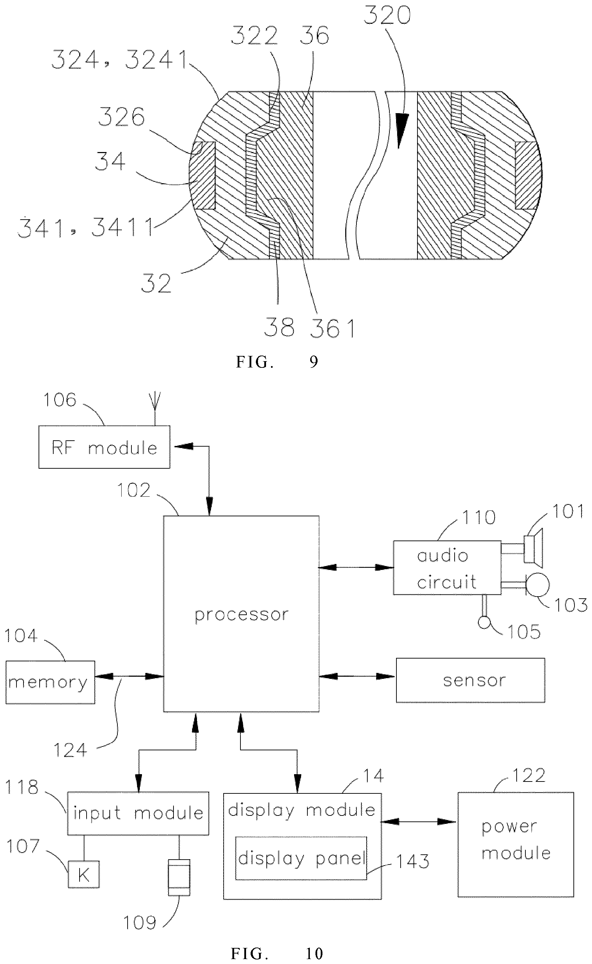

As illustrated in FIG. 8 and FIG. 9, in some embodiments, the frame assembly 30 further includes an interlayer 38. The interlayer 38 is sandwiched between the first frame 32 and the third frame 36. In the illustrated embodiments, the interlayer 38 is an adhesive layer for bonding the third frame 36 and the first frame 32. For example, the interlayer 38 may be made of a bonding material such as glue or double-sided tape. In other embodiments, the interlayer 38 may be a decorative layer. For example, the interlayer 38 may be a decorative sheet disposed between the first frame 32 and the third frame 36, such as a film sheet or other decorative material. In still other alternative embodiments, the interlayer 38 can be a buffer layer for achieving and buffering between the first frame 32 and the third frame 36. And the interlayer 38 can be configured to absorb impact energy of the frame assembly 30 when dropped. Furthermore, the interlayer 38 may be made of elastic material. For example, the material of the interlayer 38 can be selected from a group of plastic, resin, and rubber, and any combination thereof.

Furthermore, in some embodiments, the frame assembly 30 may define one or more through holes (not illustrated) therein. The through holes may be configured to accommodate one or more physical buttons of the electronic device 100. The through hole can also be configured as a power entry, a data entry, a headphone hole, a speaker sound hole, a microphone sound entry, and the like of the electronic device 100. The through hole may penetrate one or more of the first frame 32, the second frame 34, the third frame 36, and the interlayer 38.

In the electronic device 100 provided in the present disclosure, by providing the non-glass-made second frame 34 coupled to the glass-made first frame 32, the second frame 34 can serve as a bumper of the frame assembly 30, and the first frame 32 is protected by the second frame 34. In addition, because the second frame 34 and the first frame 32 are made from different material, the non-glass-made second frame 34 can act as a decorative role.

As illustrated in FIG. 10, in the actual disclosure scenario, the electronic device 100 can be used as a smart electronic device, such as a smart phone terminal, in which case the electronic component 10 is usually further includes one or more (only one is illustrated) processors 102, a memory 104, a Radio Frequency (RF) module 106, an audio circuit 110, a sensor, an input module 118, and a power module 122. It will be understood by those skilled in the art that the structure illustrated in FIG. 10 is merely illustrative and does not limit the structure of the electronic component 10. For example, the electronic component 10 may include more or less components those illustrated in FIG. 10, or have a different configuration that illustrated in FIG.

One of ordinary skill in the art will appreciate that all other components are peripherals relative to the processor 102. The processor 102 is coupled to the peripherals via a plurality of peripheral interfaces 124. The peripheral interface 124 can be implemented based on the following standards: Universal Asynchronous Receiver/Transmitter (UART), General Purpose Input Output (GPIO), Serial Peripheral Interface (SPI), Inter-Integrated Circuit (I2C), but not limited to the above standards. In some examples, peripheral interface 124 may only include a bus; in other examples, peripheral interface 124 may also include other components, such as one or more controllers, such as a display controller for connecting display panel 143 or a memory controller configured to connect to the memory. In addition, these controllers can also be detached from the peripheral interface 124 and integrated into the processor 102 or within a corresponding peripheral.

The memory 104 can be configured to store software programs and modules. The processor 102 executes various functional disclosures and data processing by executing software programs and modules stored in the memory 104. The memory 104 may include high speed random access memory and may also include non-volatile memory such as one or more magnetic storage devices, flash memory, or other non-volatile solid state memory. In some embodiments, the memory 104 may further include a memory remotely located relative to processor 102, which may be coupled to the electronic component 10 or display module 14 via a network. Examples of such networks may include, but are not limited to, the Internet, intranets, local area networks, mobile communication networks, and combinations thereof.

The RF module 106 is configured to receive and transmit electromagnetic waves, and convert electromagnetic waves and electrical signals to communicate with a communication network or other device. The RF module 106 can include various existing circuit components for performing the communication functions, such as an antenna, a radio frequency transceiver, a digital signal processor, an encryption/decryption chip, a Subscriber Identity Module (SIM) card, a memory, and the like. The RF module 106 can communicate with various networks such as the Internet, an intranet, a wireless network, or communicate with other devices via a wireless network. The wireless network described above may include a cellular telephone network, a wireless local area network, or a metropolitan area network. The above wireless network can use various communication standards, protocols and technologies, including but not limited to Global System for Mobile Communication (GSM), Enhanced Data GSM Environment (EDGE), and wideband code. Wideband code division multiple access (W-CDMA), Code division access (CDMA), time division multiple access (TDMA), wireless fidelity (Wireless, Fidelity), Wi-Fi) (such as the Institute of Electrical and Electronics Engineers Standards IEEE 802.10A, IEEE 802.11b, IEEE 802.11g and / or IEEE 802.11n), Voice over internet protocol (VoIP), Worldwide Interoperability (Worldwide Interoperability) For Microwave Access, Wi-Max, other protocols for mail, instant messaging and short messages, and any other suitable communication protocols, even those that are not currently being developed.

The audio circuit 110, the speaker 101, the sound jack 103, and the microphone 105 cooperatively provide an audio interface between a user and the electronic component 10 or the display module 14. In the illustrated embodiment, the audio circuit 110 can receive a sound data from the processor 102, and the audio circuit 110 can convert the sound data into an electrical signal, and transmit the electrical signal to the speaker 101. The speaker 101 can convert the electrical signal into a sound wave that can be heard by a human ear. The audio circuit 110 can also receive electrical signals from the microphone 105, and convert the electrical signals into sound data, and further transmit the sound data to the processor 102 for further processing. The audio data may be obtained from memory 104 or the RF module 106. Additionally, audio data may also be stored in memory 104 or transmitted by the RF module 106.

Sensors are disposed in the electronic component 10 or in the display module 14. Examples of the sensors can include, but are not limited to, light sensors, operational sensors, pressure sensors, gravity acceleration sensors, and other sensors.

In this embodiment, the input module 118 can include a touch screen 109 disposed on the display module 14. The touch screen 109 can collect touch operations on or near the touch screen 109 (such as a user using a finger, a stylus, etc., or any suitable object or accessory operates on or adjacent to the touch screen 109), and drive a corresponding connection device according to a predetermined program. Alternatively, touch screen 109 may include a touch detector and a touch controller. Wherein, the touch detector can detect the touch orientation of the user, and detect a signal brought by the touch operation, and transmits a touch signal to the touch controller. The touch controller can receive the touch signal from the touch detector, and convert the touch signal into touch coordinates, and then transmit the touch coordinates to the processor 102, and can receive a command generated by the processor 102 and execute it. In addition, the touch detection function of the touch screen 109 can be implemented by various types such as resistive, capacitive, infrared, and surface acoustic waves. In addition to touching display 109, in other variant embodiments, input module 118 may also include other input devices, such as button 107. The button 107 may include, for example, a character button for inputting a character, and a control button for triggering a control function. Examples of control buttons include a "return to home screen" button, a power on/off button, and the like.

The display module 14 is configured to display information input by the user, information provided to the user, and various graphical user interfaces of the electronic component 10, which can be composed of graphics, text, icons, numbers, videos, and any combination thereof. In one example, the touch screen 109 can be disposed on the display panel 143 to be integrated with the display panel 143.

The power module 122 is configured to provide power to the processor 102 and other components. In the illustrated embodiment, the power module 122 may include a power management system, one or more power sources (such as a battery or an alternating current), a charging circuit, a power failure detecting circuit, an inverter, a power status indicator, and any other with the electronic component 10 or a components related to the generation, management, and distribution of power within the display module14.

The electronic device 100 can also include a locator for determining the actual location at which the electronic device 100 is located. In this embodiment, the locator applies a location service to implement the positioning of the electronic device 100. The positioning service should be understood as a technology or service of the location of the object being located, which acquire the location information (such as latitude and longitude coordinates) of the electronic device 100 by using a specific positioning technology, and marking the electronic map.

## Claims

1. A frame assembly (30) for an electronic device, comprising:
a first frame (32) defining a receiving space (320) for accommodating electronic elements of the electronic device (100), the first frame (32) comprising an exterior surface (324) departing from the receiving space (320); and
a second frame (34) coupled to the exterior surface (324) of the first frame (32); wherein
the first frame (32) defines a mounting groove (326) in the exterior surface(324); the mounting groove (326) extends along a periphery direction of the first frame (32); the second frame (34) is engaged into the mounting groove (326) and surrounds the first frame (32); the first frame (32) is made of a glass material, and the second frame (34) is made of a material different from the glass material of the first frame (32); the second frame (34) comprises an exposed surface (341) departing from the receiving space (320); the exposed surface (341) is smoothly connected with the exterior surface (324) of the first frame (32); an outer surface of the frame assembly (30) is formed by the exposed surface (341) and the exterior surface (324), and the outer surface is departing from the receiving space (320).

2. The frame assembly (30) as claimed in claim 1, wherein the material of the second frame (34) is selected from a group of metal, plastic, resin, rubber, and any combination thereof.

3. The frame assembly (30) as claimed in any one of claims 1 to 2, wherein the exterior surface (324) is a curved surface, and the exposed surface (341) is a curved surface; the exposed surface (341) is continuous with the exterior surface (324).

4. The frame assembly (30) as claimed in any one of claims 1 to 3, wherein the first frame (32) further comprises an interior surface (322) facing the receiving space (320), the frame assembly (30) further comprises a third frame (36), and the third frame (36) is coupled to the interior surface (322) of the first frame (32).

5. The frame assembly (30) as claimed in claim 4, wherein the third frame (36) is made of a material selected from a group of iron, steel, stainless steel, copper, phosphor bronze, copper, beryllium copper, nickel copper alloy, magnesium alloy, and any combination thereof.

6. The frame assembly (30) as claimed in any one of claims 4 to 5 , wherein the first frame (32) is transparent, and the third frame (36) has a surface facing the first frame (32), and a decorative pattern (360) is formed on the surface facing the first frame (32).

7. The frame assembly (30) as claimed in any one of claims 4 to 6, wherein the first frame (32) further defines a first mounting portion (3221) in the interior surface (322), and the third frame (36) further comprises a second mounting portion (361); the second mounting portion (361) is engaged with the first mounting portion (3221).

8. The frame assembly (30) as claimed in claim 7, wherein the first mounting portion (3221) is a depression defined in the interior surface (322), the second mounting portion (361) is a protrusion cooperated with and received in the depression.

9. The frame assembly (30) as claimed in any one of claims 4 to 8 , wherein the third frame (36) is a closed loop frame or a non-closed loop frame.

10. The frame assembly (30) as claimed in any one of claims 4 to 8, wherein the frame assembly (30) further comprises an interlayer (38); the interlayer (38) is sandwiched between the third frame (36) and the first frame (32).

11. A housing (12) for an electronic device (100), comprising:
a rear cover (123), and
the frame assembly (30) of any one of claims 1 to 10.

12. The housing (12) as claimed in claim 11, wherein the first frame (32) further comprises an interior surface (322) facing the receiving space (320), and the frame assembly (30) further comprises a third frame (36); the third frame (36) is coupled to the interior surface (322).

13. An electronic device (100), comprising:
a rear cover (123);
a display module (14); and
the frame assembly (30) of any one of claims 1 to 10.

## Patentansprüche

1. Rahmenanordnung (30) für eine elektronische Vorrichtung, die Folgendes umfasst:
einen ersten Rahmen (32), der einen Aufnahmeraum (320) zur Unterbringung elektronischer Elemente der elektronischen Vorrichtung (100) definiert, wobei der erste Rahmen (32) eine Außenfläche (324) umfasst, die von dem Aufnahmeraum (320) abgeht; und
einen zweiten Rahmen (34), der mit der Außenfläche (324) des ersten Rahmens (32) gekoppelt ist; wobei der erste Rahmen (32) eine Befestigungsnut (326) in der Außenfläche (324) definiert; sich die Befestigungsnut (326) entlang einer Peripherierichtung des ersten Rahmens (32) erstreckt; der zweite Rahmen (34) mit der Befestigungsnut (326) in Eingriff steht und den ersten Rahmen (32) umgibt; der erste Rahmen (32) aus einem Glasmaterial hergestellt ist und der zweite Rahmen (34) aus einem Material, das von dem Glasmaterial des ersten Rahmens (32) verschieden ist, hergestellt ist; der zweite Rahmen (34) eine freiliegende Fläche (341) umfasst, die von dem Aufnahmeraum (320) abgeht; die freiliegende Fläche (341) glatt mit der Außenfläche (324) des ersten Rahmens (32) verbunden ist; eine Außenfläche der Rahmenanordnung (30) von der freiliegende Fläche (341) und der Außenfläche (324) gebildet wird und die Außenfläche von dem Aufnahmeraum (320) abgeht.

2. Rahmenanordnung (30) nach Anspruch 1, wobei das Material des zweiten Rahmens (34) aus einer Gruppe von Metall, Kunststoff, Harz, Gummi und einer beliebigen Kombination daraus ausgewählt ist.

3. Rahmenanordnung (30) nach einem der Ansprüche 1-2, wobei die Außenfläche (324) eine gekrümmte Fläche ist und die freiliegende Fläche (341) eine gekrümmte Fläche ist, wobei die freiliegende Fläche (341) mit der Außenfläche (324) durchgängig ist.

4. Rahmenanordnung (30) nach einem der Ansprüche 1-3, wobei der erste Rahmen (32) ferner eine Innenfläche (322), die zu dem Aufnahmeraum (320) weist, umfasst, die Rahmenanordnung (30) ferner einen dritten Rahmen (36) umfasst und der dritte Rahmen (36) mit der Innenfläche (322) des ersten Rahmens (32) gekoppelt ist.

5. Rahmenanordnung (30) nach Anspruch 4, wobei der dritte Rahmen (36) aus einem Material hergestellt ist, das aus einer Gruppe von Eisen, Stahl, Edelstahl, Kupfer, Phosphorbronze, Kupfer, Berylliumkupfer, Kupfernickellegierung, Magnesiumlegierung und einer beliebigen Kombination daraus ausgewählt ist.

6. Rahmenanordnung (30) nach einem der Ansprüche 4-5, wobei der erste Rahmen (32) transparent ist und der dritte Rahmen (36) eine zu dem ersten Rahmen (32) weisende Fläche aufweist und ein dekoratives Muster (360) auf der zu dem ersten Rahmen (32) weisenden Fläche ausgebildet ist.

7. Rahmenanordnung (30) nach einem der Ansprüche 4-6, wobei der erste Rahmen (32) ferner einen ersten Befestigungsabschnitt (3221) in der Innenfläche (322) definiert und der dritte Rahmen (36) ferner einen zweiten Befestigungsabschnitt (361) umfasst; wobei der zweite Befestigungsabschnitt (361) mit dem ersten Befestigungsabschnitt (3221) in Eingriff steht.

8. Rahmenanordnung (30) nach Anspruch 7, wobei der erste Befestigungsabschnitt (3221) eine in der Innenfläche (322) definierte Vertiefung ist, wobei der zweite Befestigungsabschnitt (361) ein mit der Vertiefung zusammenwirkender und darin aufgenommener Vorsprung ist.

9. Rahmenanordnung (30) nach einem der Ansprüche 4-8, wobei der dritte Rahmen (36) ein durchgängiger Rahmen oder ein nicht durchgängiger Rahmen ist.

10. Rahmenanordnung (30) nach einem der Ansprüche 4-8, wobei die Rahmenanordnung (30) ferner eine Zwischenlage (38) umfasst; wobei die Zwischenlage (38) zwischen den dritten Rahmen (36) und den ersten Rahmen (32) geklemmt ist.

11. Gehäuse (12) für eine elektronische Vorrichtung (100), das Folgendes umfasst:
eine hintere Abdeckung (123), und
die Rahmenanordnung (30) nach einem der Ansprüche 1-10.

12. Gehäuse (12) nach Anspruch 11, wobei der erste Rahmen (32) ferner eine zu dem Aufnahmeraum (320) weisende Innenfläche (322) umfasst und die Rahmenanordnung (30) ferner einen dritten Rahmen (36) umfasst; wobei der dritte Rahmen (36) mit der Innenfläche (322) gekoppelt ist.

13. Elektronische Vorrichtung (100), die Folgendes umfasst:
eine hintere Abdeckung (123);
ein Displaymodul (14); und
die Rahmenanordnung (30) nach einem der Ansprüche 1-10.

## Revendications

1. Ensemble cadre (30) pour un dispositif électronique, comprenant :
un premier cadre (32) définissant un espace de réception (320) pour recevoir des composants électroniques du dispositif électronique (100), le premier cadre (32) comprenant une surface extérieure (324) partant de l'espace de réception (320) ; et
un deuxième cadre (34) accouplé à la surface extérieure (324) du premier cadre (32) ; le premier cadre (32) définissant une rainure de montage (326) dans la surface extérieure (324) ; la rainure de montage (326) s'étendant le long d'une direction périphérique du premier cadre (32) ; le deuxième cadre (34) étant engagé dans la rainure de montage (326) et entourant le premier cadre (32) ; le premier cadre (32) étant fabriqué en un matériau en verre, et le deuxième cadre (34) étant fabriqué en un matériau différent du matériau en verre du premier cadre (32) ; le deuxième cadre (34) comprenant une surface exposée (341) partant de l'espace de réception (320) ; la surface exposée (341) étant connectée de manière lisse à la surface extérieure (324) du premier cadre (32) ; une surface extérieure de l'ensemble cadre (30) étant formée par la surface exposée (341) et la surface extérieure (324), et la surface extérieure partant de l'espace de réception (320).

2. Ensemble cadre (30) selon la revendication 1, dans lequel le matériau du deuxième cadre (34) est choisi parmi un groupe constitué de métal, plastique, résine, caoutchouc et n'importe quelle combinaison de ceux-ci.

3. Ensemble cadre (30) selon l'une quelconque des revendications 1 et 2, dans lequel la surface extérieure (324) est une surface courbe et la surface exposée (341) est une surface courbe ; la surface exposée (341) étant continue avec la surface extérieure (324).

4. Ensemble cadre (30) selon l'une quelconque des revendications 1 à 3, dans lequel le premier cadre (32) comprend en outre une surface intérieure (322) faisant face à l'espace de réception (320), l'ensemble cadre (30) comprenant en outre un troisième cadre (36) et le troisième cadre (36) étant accouplé à la surface intérieure (322) du premier cadre (32).

5. Ensemble cadre (30) selon la revendication 4, dans lequel le troisième cadre (36) est fabriqué en un matériau choisi parmi un groupe constitué de fer, d'acier, d'acier inoxydable, de cuivre, de bronze phosphoreux, de cuivre, de cuivre au béryllium, d'un alliage nickel-cuivre, d'un alliage de magnésium et de n'importe quelle combinaison de ceux-ci.

6. Ensemble cadre (30) selon l'une quelconque des revendications 4 et 5, dans lequel le premier cadre (32) est transparent et le troisième cadre (36) présente une surface faisant face au premier cadre (32), et un motif décoratif (360) est formé sur la surface faisant face au premier cadre (32).

7. Ensemble cadre (30) selon l'une quelconque des revendications 4 à 6, dans lequel le premier cadre (32) définit en outre une première portion de montage (3221) dans la surface intérieure (322), et le troisième cadre (36) comprend en outre une deuxième portion de montage (361) ; la deuxième portion de montage (361) étant engagée avec la première portion de montage (3221).

8. Ensemble cadre (30) selon la revendication 7, dans lequel la première portion de montage (3221) est un renfoncement défini dans la surface intérieure (322), la deuxième portion de montage (361) est une saillie coopérant avec, et reçue dans, le renfoncement.

9. Ensemble cadre (30) selon l'une quelconque des revendications 4 à 8, dans lequel le troisième cadre (36) est un cadre en boucle fermée ou un cadre en boucle non fermée.

10. Ensemble cadre (30) selon l'une quelconque des revendications 4 à 8, l'ensemble cadre (30) comprenant en outre une couche intercalaire (38) ; la couche intercalaire (38) étant prise en sandwich entre le troisième cadre (36) et le premier cadre (32).

11. Boîtier (12) pour un dispositif électronique (100), comprenant :
un recouvrement arrière (123) et
l'ensemble cadre (30) selon l'une quelconque des revendications 1 à 10.

12. Boîtier (12) selon la revendication 11, dans lequel le premier cadre (32) comprend en outre une surface intérieure (322) faisant face à l'espace de réception (320), et l'ensemble cadre (30) comprend en outre un troisième cadre (36) ; le troisième cadre (36) étant accouplé à la surface intérieure (322).

13. Dispositif électronique (100), comprenant :
un recouvrement arrière (123) ;
un module d'affichage (14) ; et
l'ensemble cadre (30) selon l'une quelconque des revendications 1 à 10.
